# DEMANDE DE BREVET EUROPEEN

(11) **EP 0 806 582 A2**
(43) Date de publication de la demande: **12.11.1997**
(21) Numéro de dépôt: 97401019.1
(22) Date de dépôt: 06.05.1997
(51) Int. Cl.: F16D 23/14, F16C 33/38

(54) **Roulement de butée d'embrayage avec cage à retenue axiale**

(30) Priorité: 10.05.1996 FR 9605860
(71) Demandeur: SKF FRANCE, F-92140 Clamart (FR)
(72) Inventeur: Ponson, Frédéric, 37230 Luynes (FR); Rousseau, Jean, 37700 La Ville Aux Dames (FR); Nicaud, Daniel, 37000 Tours (FR); Coquelin, Jean Philippe, 37000 Tours (FR)
(74) Mandataire: Casalonga, Axel

(57) **Abrégé**

Roulement, notamment destiné à équiper une butée d'embrayage, du type comprenant une bague intérieure 1 et une bague extérieure 5, réalisées en tôle, chaque bague comportant un chemin de roulement circulaire ayant la forme d'une portion de tore, ledit chemin présentant en section axiale méridienne un profil en arc de cercle concave, une rangée de billes 3 maintenues par une cage de maintien 8 et disposées entre le chemin de roulement 2 d'une première bague 1 qui forme une butée axiale pour les éléments roulants 3 dans un premier sens, et le chemin de roulement 5b d'une deuxième bague 5 qui forme une butée axiale pour les éléments roulants 3 dans un deuxième sens, et un organe d'étanchéité 9 fixé sur la deuxième bague 5. La cage de maintien 8 des éléments roulants 3 comprend des moyens formant butée axiale dans le deuxième sens et coopérant avec un rebord 18 solidaire de la première bague 1, le chemin de roulement de l'une des bagues étant situé axialement d'un côté du plan passant par le centre des billes, tandis que le chemin de roulement de l'autre bague est situé axialement de l'autre côté dudit plan. L'organe d'étanchéité 9 comprend des moyens pour retenir axialement les éléments roulants 3 et leur cage de maintien 8 par rapport à la deuxième bague 5 dans le premier sens.

## Description

La présente invention concerne le domaine des roulements et plus particulièrement des roulements de butée d'embrayage comportant une bague tournante et une bague non tournante, réalisées en tôle emboutie, chaque bague comportant un chemin de roulement circulaire ayant la forme d'une portion de tore, ledit chemin présentant en section axiale un profil en arc de cercle concave, et des billes disposées entre les chemins de roulement des deux bagues et maintenues à un espacement circonférentiel régulier par une cage en matière plastique.

On connaît, par exemple, des roulements de butée d'embrayage dont la bague intérieure non tournante est pourvue d'un chemin de roulement circulaire présentant en section axiale méridienne un profil en arc de cercle concave et dont la partie principale qui s'étend axialement d'un côté du plan radial défini par le centre des billes se prolonge de l'autre côté dudit plan radial pour former un redan. On dispose alors la rangée de billes maintenue par la cage sur le chemin de roulement de la bague intérieure puis on dispose la bague extérieure autour de la rangée de billes et on monte un joint d'étanchéité sur la bague extérieure. Une fois le roulement assemblé, le redan de la bague intérieure empêche le démontage accidentel dudit roulement pendant des manipulations. En effet, si l'on tend à séparer axialement les deux bagues, le joint d'étanchéité vient buter contre la rangée de billes qui elle-même est immobilisée axialement par le redan.

Ce type de roulement présente, toutefois, quelques inconvénients. Le chemin de roulement avec redan de la bague intérieure ne peut pas être obtenu directement par emboutissage, traitement thermique et rodage complémentaire mais par emboutissage, traitement thermique, puis rectification et rodage, ce qui complique la fabrication et augmente le coût de la pièce. Dans le processus d'assemblage du roulement, on est obligé de constituer d'abord un sous-ensemble comprenant la cage, la rangée de billes et la bague intérieure puis de mettre en place la bague extérieure, le joint d'étanchéité étant mis en place en dernier. La manipulation d'ensembles bague intérieure, cage et billes est toujours délicate car les billes sont particulièrement exposées aux chocs, à la pollution par des corps étrangers et à des risques de désencliquetage des alvéoles de la cage. En outre, dans certains cas, par exemple lorsque la bague intérieure comporte comme face d'appui une collerette radiale dirigée vers l'extérieur, le faible espace axial résiduel entre la bague extérieure et la collerette d'appui de la bague intérieure impose d'utiliser un organe d'étanchéité mis en place sur la bague intérieure avant la mise en place de l'ensemble cage et bille, ledit organe d'étanchéité étant ensuite serti vers l'avant sur la bague extérieure une fois celle-ci positionnée sur les billes. Le montage est donc relativement complexe et les joints d'étanchéité utilisés dans ce cas sont coûteux.

La présente invention a pour objet de remédier aux inconvénients précités en proposant un roulement, dont les bagues intérieure et extérieure sont solidarisées sans nécessiter d'opérations supplémentaires de rectification, et une butée d'embrayage équipée d'un tel roulement.

L'invention a également pour objet un roulement de butée que l'on puisse monter en un sous-ensemble comprenant la bague extérieure, la rangée de billes maintenue par la cage et le joint d'étanchéité de façon à fixer le joint d'étanchéité sur la bague extérieure avant le montage de la bague intérieure.

Le roulement, selon l'invention, est notamment destiné à équiper une butée d'embrayage et est du type comprenant une bague intérieure et une bague extérieure, réalisées en tôle, chaque bague comportant un chemin de roulement circulaire ayant la forme d'une portion de tore, ledit chemin présentant en section axiale méridienne un profil en arc de cercle concave, une rangée de billes maintenues par une cage de maintien et disposées entre le chemin de roulement d'une première bague qui forme une butée axiale pour les billes dans un premier sens, et le chemin de roulement d'une deuxième bague qui forme une butée axiale pour les billes dans un deuxième sens, et un organe d'étanchéité fixé sur la deuxième bague, et comprenant des moyens pour retenir axialement les billes et leur cage de maintien par rapport à la deuxième bague dans le premier sens. La cage de maintien des éléments roulants comprend des moyens formant butée axiale dans le deuxième sens et coopérant avec un rebord solidaire de la première bague, le chemin de roulement de l'une des bagues étant situé axialement d'un côté du plan passant par le centre des billes, tandis que le chemin de roulement de l'autre bague est situé axialement de l'autre côté dudit plan. Grâce à l'invention, on obtient un roulement dont la bague intérieure peut être fabriquée de façon économique, sans enlèvement de copeaux et dont le processus d'assemblage se trouve fiabilisé et peut être facilement automatisé.

Dans un mode de réalisation de l'invention, la première bague comprend une portée cylindrique pourvue d'une rainure annulaire avec au moins un bord radial capable de coopérer avec les moyens formant une butée. De préférence, la cage de maintien des billes comprend une portion de butée faisant saillie radialement dans la rainure de la première bague.

La portion de butée peut comprendre une rangée d'ergots ou une lèvre circulaire flexible radialement.

Dans un mode de réalisation de l'invention, la portion de butée comprend une surface frontale destinée à coopérer avec un bord radial de la rainure, ainsi qu'une surface oblique destinée à faciliter le montage de la cage de maintien sur la première bague.

Dans un mode de réalisation de l'invention, la cage de maintien des billes comportant des alvéoles pour les billes, les moyens formant butée sont disposés entre les alvéoles.

Dans un autre mode de réalisation de l'invention, les moyens formant butée sont disposés du côté de l'organe d'étanchéité.

Dans un autre mode de réalisation de l'invention, les moyens formant butée sont disposés du côté opposé à l'organe d'étanchéité.

Avantageusement, le chemin de roulement de l'une des bagues est situé axialement d'un côté du plan passant par le centre des billes et le chemin de roulement de l'autre bague est situé axialement de l'autre côté dudit plan.

L'invention a également pour objet une butée d'embrayage équipée d'un tel roulement et comportant une douille de guidage présentant une surface radiale entrant en contact de friction avec une partie radiale de la bague non tournante et une surface cylindrique coopérant avec des moyens d'auto-alignement élastiques du roulement. Pour le montage du roulement, on constitue un sous-ensemble comprenant la bague extérieure, la rangée de billes maintenues par leur cage et l'organe d'étanchéité fixé sur la bague extérieure, et on amène la bague intérieure par un mouvement axial, les billes venant en contact avec le chemin de roulement de ladite bague intérieure et les moyens formant butée axiale de la cage venant coopérer avec le rebord de ladite bague intérieure.

La bague intérieure de roulement est fabriquée comme suit : on forme par emboutissage à partir d'un flan de tôle au moins un chemin de roulement destiné à coopérer avec des billes et formant une butée axiale pour lesdites billes dans un seul sens, une portée cylindrique adjacente au chemin de roulement de façon que le plan radial séparant le chemin de roulement et la portion cylindrique passe par le centre des billes, et une rainure annulaire dont le bord opposé au chemin de roulement est sensiblement radial, puis on traite thermiquement la bague et on rode le chemin de roulement.

Grâce à l'invention, on peut réaliser la bague intérieure par un procédé de fabrication simple, ne nécessitant pas la formation d'un chemin de roulement muni d'un redan, éliminant par là-même la nécessité d'une opération de rectification pour l'usinage dudit redan.

Toujours, grâce à l'invention, on peut constituer d'abord des sous-ensembles comportant la bague extérieure, la cage et la rangée d'éléments roulants ce qui permet une meilleure protection des éléments roulants en diminuant les risques d'endommagement et de perte de billes. On facilite ainsi l'automatisation du processus d'assemblage.

L'invention sera mieux comprise à l'étude de la description détaillée de quelques modes de réalisation particuliers pris à titre d'exemples nullement limitatifs et illustrés par les dessins annexés sur lesquels :
la figure 1 est une vue en demi-coupe axiale d'un roulement de butée d'embrayage selon l'invention;
la figure 2 est une vue en demi-coupe axiale d'un roulement de butée d'embrayage selon l'art antérieur;
la figure 3 est une vue de détail de la bague intérieure du roulement de la figure 2;
la figure 4 est une vue de détail du roulement de la figure 1;
la figure 5 est une vue partielle de face en élévation de la cage de maintien des éléments roulants;
la figure 6 est une variante de la figure 5;
la figure 7 est une vue en demi-coupe axiale d'un roulement de butée d'embrayage selon un autre mode de réalisation de l'invention;
la figure 8 est une vue en demi-coupe axiale d'un roulement de butée d'embrayage selon un autre mode de réalisation de l'invention;
les figures 9 et 10 montrent deux étapes d'assemblage du roulement de la figure 7; et
les figures 11 et 12 montrent deux étapes du procédé de fabrication de la bague intérieure du roulement de la figure 7.

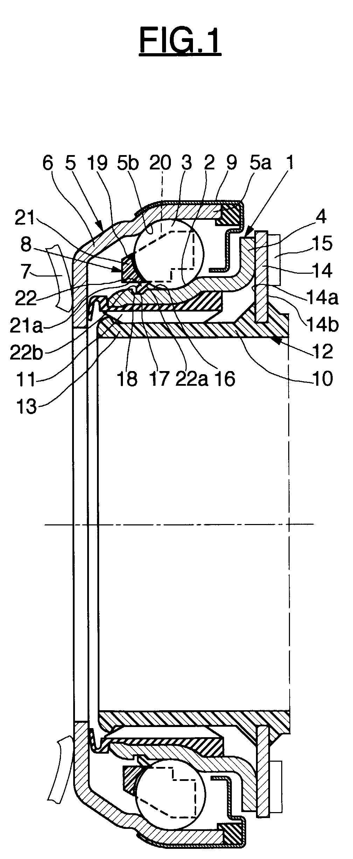

Tel qu'il est représenté sur la figure 1, le roulement de butée d'embrayage comprend une bague intérieure de roulement 1 à paroi mince réalisée par emboutissage d'une tôle ou d'un tube présentant un chemin de roulement circulaire en forme de portion de tore 2 pour une rangée de billes 3, ledit chemin présentant en section axiale méridienne un profil en arc de cercle concave. La bague intérieure 1 comporte une portion radiale 4 dirigée vers l'extérieur.

Pendant le fonctionnement de la butée d'embrayage, la bague intérieure 1 reste fixe. Le palier à roulement se complète par une bague extérieure 5 présentant une portion radiale 6 en saillie vers l'extérieur de l'ensemble et qui est capable de venir en contact avec la surface d'un diaphragme 7 ou d'un élément équivalent permettant l'actionnement d'un embrayage, par exemple de véhicule automobile. La bague extérieure 5 comporte également une paroi mince et peut être réalisée par emboutissage d'une tôle ou d'un tube. La bague extérieure 5 présente un chemin de roulement circulaire 5b en forme de portion de tore pour la rangée de billes 3, ledit chemin présentant en section axiale méridienne un profil en arc de cercle concave. Les billes 3 sont maintenues par une cage 8 entre le chemin de roulement 2 de la bague intérieure 1 et celui 5b de la bague extérieure 5. Le roulement à billes se complète par un capot de protection 9 monté de manière étanche sur une branche cylindrique 5a de la bague extérieure 5 à l'opposé de la portion radiale 6.

La portion interne de la bague intérieure 1 comporte une pièce élastique 10 présentant une pluralité de nervures 11 orientées radialement ou légèrement inclinées par rapport à une direction radiale et susceptibles de fléchir afin de permettre l'auto-alignement de la butée.

Un manchon de guidage rigide référencé 12 dans son ensemble sert de support au roulement à billes précité par l'intermédiaire des nervures 11. Le manchon de guidage 12 comporte une partie cylindrique en forme de douille 13 sur la surface cylindrique externe de laquelle les nervures 11 viennent en contact. La douille 13 est réalisée en matériau synthétique. Le manchon 12 comporte en outre à l'extrémité de la douille 13 une portion radiale d'appui 14 réalisée en tôle mince sur laquelle est surmoulée la douille 13. La portion radiale d'appui 14 comporte deux surfaces radiales opposés 14a et 14b. Une fourchette de débrayage 15 vient en contact avec la surface radiale 14b de la portion radiale d'appui 14 et est capable de commander le déplacement axial de la butée d'embrayage. La portion radiale 4 dirigée vers l'extérieur de la bague intérieure 1 est en contact de frottement avec la surface radiale 14a de la portion radiale d'appui 14. Dans ces conditions, pour compenser un défaut d'alignement ou de centrage de la butée d'embrayage par rapport au diaphragme, le roulement à billes constitué par les deux bagues 1 et 5 et les billes 3 peut se déplacer dans un plan radial par rapport au manchon rigide 12, les nervures élastiques 11 s'écrasant plus ou moins et ce mouvement dans un plan radial étant guidé par le contact de frottement entre la branche radiale 4 et la surface 14a de la portion radiale 14. La fourchette de commande 15 vient prendre appui sur la surface radiale 14b, réalisée en acier traité et opposée à la surface radiale 14a de la portion radiale d'appui 14.

La bague intérieure 1 comprend une portée cylindrique 16 adjacente au chemin de roulement 2 des billes 3. Sur cette portée cylindrique 16 est prévue une rainure annulaire 17 dont le bord 18 du côté opposé aux billes 3 est sensiblement radial. La cage 8 comprend des alvéoles 19 dans lesquelles sont disposées les billes 3, des portions d'espacement 20 disposées circonférentiellement entre les alvéoles 19 et une portion annulaire 21 disposée entre les billes 3 et la portion radiale 6 de la bague extérieure 5. La portion annulaire 21 comprend une surface cylindrique 21a faisant face à la rainure 17 de la bague intérieure 1. Sur cette surface cylindrique 21a sont disposés des ergots de retenue 22 qui font saillie dans la rainure 17 de la bague intérieure 1. Les ergots de retenue 22 comprennent une surface oblique 22a ainsi qu'une surface frontale 22b.

La surface oblique 22a facilite le montage de la cage 8 équipée des billes 3 sur la bague intérieure 1, les ergots 22 pouvant facilement fléchir vers l'extérieur puis reprendre leur forme initiale dans la rainure 17. La surface frontale 22b peut venir en contact axial contre le bord radial 18 de la rainure 17 et former ainsi une butée empêchant la cage 8 et les billes 3 de se désolidariser de la bague intérieure 1.

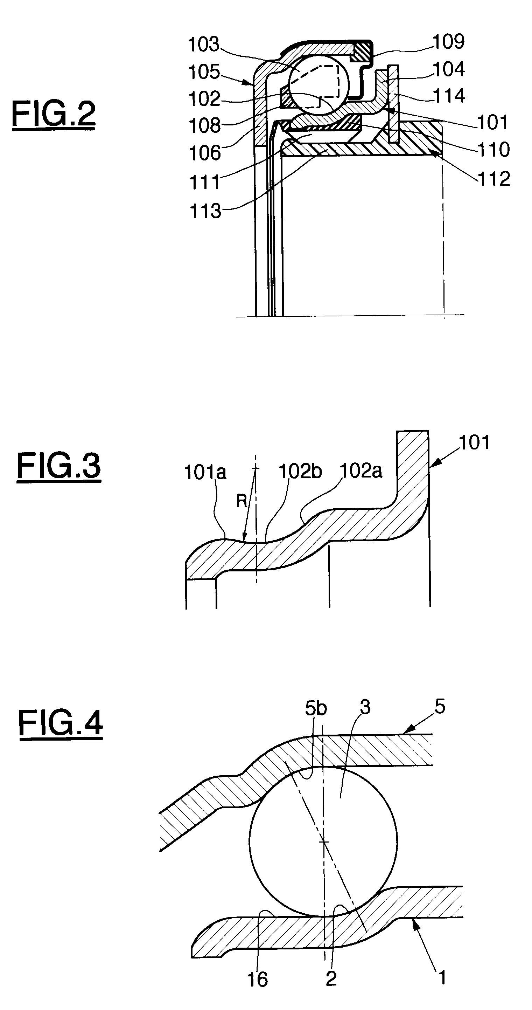

Les figures 2 et 3 illustrent un roulement selon l'art antérieur. Les références des éléments semblables à ceux de la figure 1 ont été augmentées du nombre 100. Le roulement de butée d'embrayage comprend une bague intérieure 101 pourvue d'un chemin de roulement circulaire 102 en forme de portion de tore pour des billes 103 et d'une portion 104 s'étendant radialement vers l'extérieur. Le roulement comprend également une bague extérieure 105 comportant une portion 106 s'étendant radialement vers l'intérieur. Les billes 103 sont maintenues par une cage 108. La bague extérieure supporte un joint d'étanchéité 109 capable de solidariser axialement ladite bague extérieure 105 et la rangée de billes 103. La bague intérieure 101 est montée sur des moyens d'auto-alignement élastiques 110, 111 par rapport à une douille de guidage 112 qui comprend une portion cylindrique 113 et une collerette radiale d'appui 114 en contact axial avec la portion radiale 104 de la bague intérieure 101.

Dans la pratique, le rayon R du profil concave des chemins de roulement, bien que très proche de la valeur du rayon des billes, est choisi très légèrement supérieur audit rayon des billes afin que le contact théorique entre une bille et les chemins de roulement se fasse en deux points diamétralement opposés et suivant une ligne de contact faisant un certain angle par rapport à un plan radial passant par le centre des billes.

Vu la très faible différence entre rayon de billes et rayon de profil de chemin de roulement, on admettra dans ce qui suit, pour la simplification de l'exposé, que ces rayons sont identiques et que la présence ou non d'un redan sur un chemin de roulement est donc liée au prolongement axial du chemin de roulement de l'autre côté d'un plan radial passant par le centre des billes.

La partie principale 102a du chemin de roulement circulaire 102 se trouve axialement d'un côté du plan radial passant par le centre des billes.

Le chemin de roulement circulaire 102 se prolonge également de l'autre côté du plan radial, et sur une faible distance axiale, de façon à définir un redan 101a dont le diamètre est supérieur à celui 102b du fond de la gorge formée par le chemin de roulement 102.

Une telle bague intérieure 101 est obtenue par emboutissage, traitement thermique, rectification avec enlèvement de copeaux pour former le profil du chemin de roulement circulaire 102 comprenant le redan 101a puis rodage. Une fois disposées dans le chemin de roulement 102, les billes 103 maintenues par la cage 108 ne peuvent pas se désolidariser de la bague intérieure 101 car elles sont retenues par ledit redan 101a.

Comme on le voit plus particulièrement sur la figure 4, le chemin de roulement 2 de la bague intérieure est dépourvu de redan et est adjacent à la portée cylindrique 16. Le profil du chemin de roulement 2 peut donc être obtenu directement par emboutissage et ne nécessite pas d'opération de rectification pour la formation du redan. Le chemin de roulement 2 de la bague intérieure 1 est situé dans sa totalité axialement d'un côté du plan qui passe par le centre des billes 3 tandis que le chemin de roulement 5b de la bague extérieure 5 est situé dans sa totalité axialement de l'autre côté du même plan. Les billes 3 sont ainsi en butée axiale dans un premier sens contre la bague intérieure et en butée axiale dans un deuxième sens contre la bague extérieure 5.

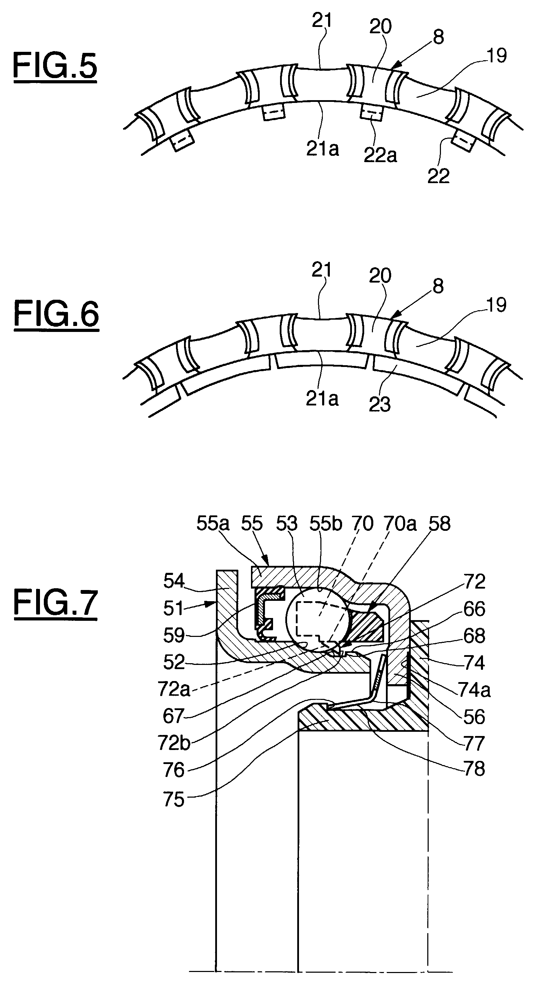

Telle qu'elle est représentée sur la figure 5, la cage 8 de maintien des éléments roulants comprend des portions d'espacement 20 qui séparent les alvéoles 19 prévues pour recevoir les éléments roulants. Sur l'alésage 21a de la portion annulaire 21 est prévue une pluralité d'ergots radiaux 22 capable de coopérer avec un rebord d'une bague intérieure.

La cage 8 illustrée sur la figure 6 est semblable à celle de la figure 5 à ceci près que les ergots sont remplacés par une lèvre annulaire discontinue 23 dont la fonction est identique à celle des ergots. La lèvre annulaire 23 assure une butée plus ferme que les ergots tout en conservant une certaine souplesse pour l'assemblage.

Pour le mode de réalisation illustré sur la figure 7, les références des éléments semblables à ceux de la figure 1 ont été augmentées du nombre 50. Le roulement de butée comprend une bague intérieure tournante 51 comprenant un chemin de roulement 52 pour les éléments roulants 53 et une portion 54 s'étendant radialement vers l'extérieur et capable d'entrer en contact avec un diaphragme d'embrayage non représenté. Le roulement comprend également une bague extérieure fixe 55 avec un chemin de roulement 55b pour les éléments roulants 53. La bague extérieure comprend également une portion cylindrique 55a s'étendant en direction du diaphragme d'embrayage et supportant un joint d'étanchéité 59. L'autre extrémité de la bague extérieure 55 constitue une portion radiale 56 s'étendant radialement vers l'intérieur et solidaire axialement d'un piston 74 d'un dispositif de commande hydraulique de la butée d'embrayage.

Le piston 74 comprend une face frontale d'appui 74a en contact avec un côté de la portion radiale 56 de la bague extérieure 55, et une protubérance cylindrique 75 s'étendant en direction du diaphragme d'embrayage et pourvue sur sa surface extérieure d'un redan 76. Une rondelle 77 biconique pourvue de dents 78 est disposée entre un bourrelet radial annulaire 76 de la protubérance cylindrique 75 et l'autre côté de la portion cylindrique 56 de la bague extérieure 55. Ainsi le roulement dispose d'un certain jeu radial par rapport au piston 74 tout en étant maintenu axialement par la surface frontale 74a et la rondelle élastique 77.

La portée cylindrique 66 de la bague intérieure 51 est pourvue d'une rainure 67 comportant un bord radial 68. La cage 58 de maintien des éléments roulants 53 comprend sur la face interne 70a de chaque portion d'espacement 70 un ergot 72 qui s'étend en oblique vers l'intérieur jusque dans la rainure 67. L'ergot 72 comprend une surface oblique 72a destinée à faciliter le montage de la cage sur la portée cylindrique 66, et une surface frontale 72b formant une butée axiale en contact avec le bord radial 68 de la rainure 67.

Les éléments roulants 53 et la cage 58 sont ainsi maintenus axialement par rapport à la bague intérieure 51 par les ergots 72. La bague extérieure 55 est maintenue axialement par rapport aux éléments roulants 53 et à la cage 58 par le joint d'étanchéité 59.

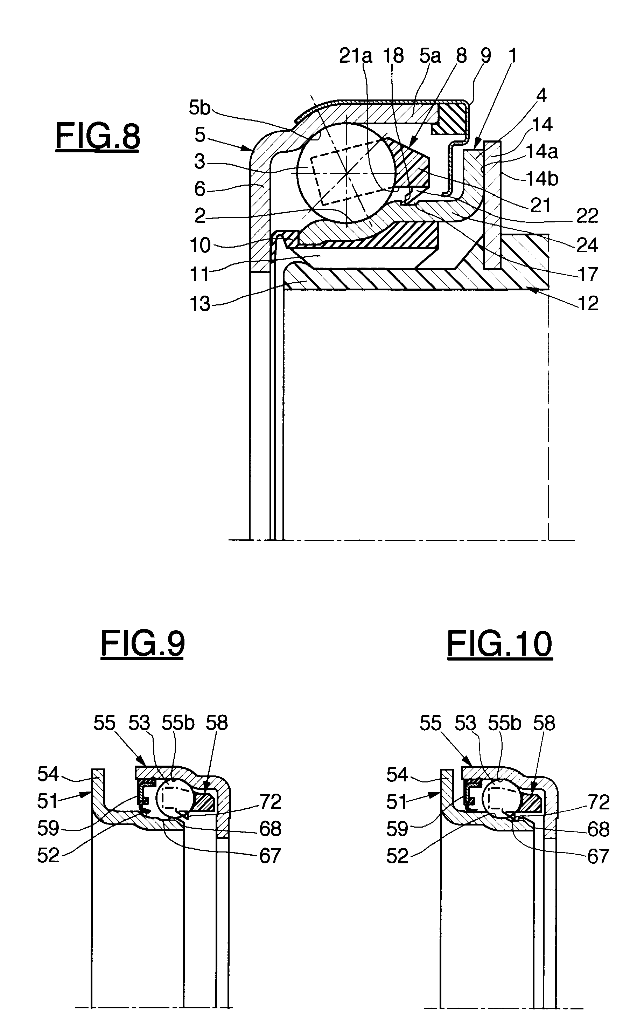

Sur la figure 8, le roulement de butée est semblable à celui de la figure 1 à ceci près que la rainure 17 est disposée sur une portion 24 sensiblement cylindrique de la bague intérieure 1 entre le chemin de roulement 2 des éléments roulants 3 et la portion radiale 4. La portion annulaire 21 de la cage 8 est disposée entre les éléments roulants 3 et le joint d'étanchéité 9. L'alésage 21a de la portion annulaire 21 de la cage 8 comprend des ergots 22 similaires à ceux de la figure 1 et faisant saillie radialement dans la rainure 17.

Les figures 9 et 10 illustrent deux étapes du montage d'un roulement identique à celui de la figure 7. Pour le montage du roulement de butée, on prend tout d'abord la bague extérieure 55. On dispose dans le chemin de roulement 55b de la bague extérieure 55 une rangée de billes 53 maintenue par leur cage de maintien 58. On emmanche le joint d'étanchéité 59. On dispose alors d'un sous-ensemble duquel les billes 53 ne peuvent échapper et à l'intérieur duquel lesdites billes 53 sont bien protégées. Puis par un mouvement axial on amène une bague intérieure 51 face au sous-ensemble comprenant la bague extérieure 55, les billes 53, la cage 58 et le joint d'étanchéité 59. Au cours du mouvement axial, les ergots 72 de la cage 58 entrent en contact avec l'extrémité frontale de la bague intérieure 51, fléchissent en s'effaçant puis reprennent leur forme initiale en faisant saillie dans la rainure 67. Les billes 53 viennent en contact avec le chemin de roulement 52 de la bague intérieure 51. Le roulement de butée est ainsi prémuni contre un désassemblage accidentel, les billes 53 étant, dans un sens en butée axiale contre le chemin de roulement 55b de la bague extérieure 55 et dans l'autre sens capables d'entrer en contact de butée avec le joint d'étanchéité 59, et, dans un sens, en butée contre le bord radial 68 de la bague intérieure 51 par l'intermédiaire de la cage 58 et des ergots 72 et, dans l'autre sens, en butée axiale contre le chemin de roulement 52 de la bague intérieure 51.

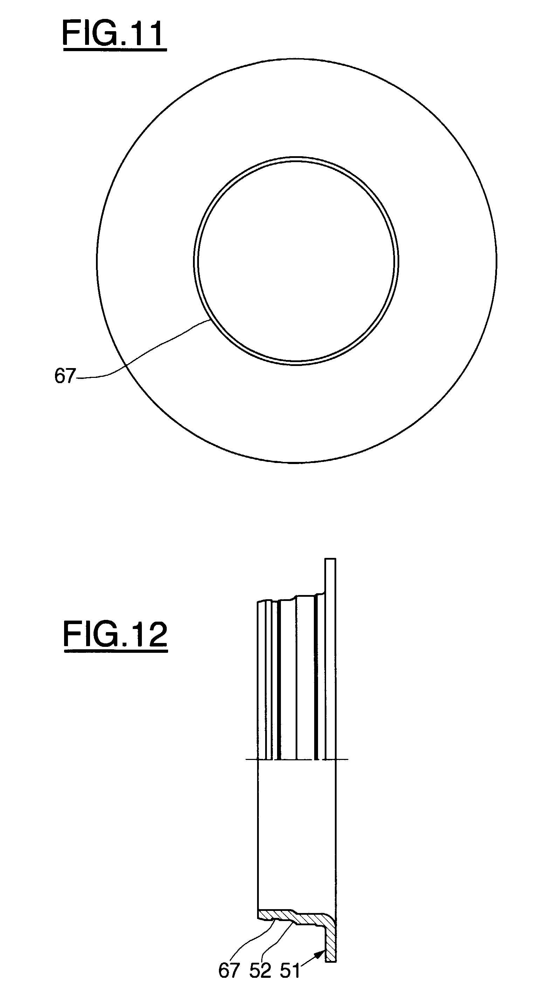

Les figures 11 et 12 montrent la fabrication sans enlèvement de copeaux de la bague intérieure 51 munie de la rainure 67. A partir d'un flan en tôle (figure 11) en forme de disque plan, on forme l'empreinte de la rainure 67 par estampage à plat puis la bague intérieure 51 par emboutissage du flan (figure 12). On obtient ainsi de façon économique une bague intérieure 51 munie de la rainure 67 en évitant ainsi des opérations de reprises par tournage ou rectification pour l'usinage de ladite rainure.

Le chemin de roulement obtenu par emboutissage présentant le profil désiré ainsi qu'un bon état de surface, un simple rodage de la gorge sera suffisant pour conférer au chemin de roulement l'état de surface final requis sur le plan de la rugosité.

On comprendra que l'utilisation de bagues en tôle permet de tirer le meilleur parti de l'invention sur le plan des économies de fabrication.

Contrairement à ce qui se passerait pour des bagues massives réalisées par des procédés conventionnels avec enlèvement de copeaux, on obtient directement par emboutissage, donc d'une façon économique, des bagues intérieures munies de leur rainure annulaire.

Grâce à l'invention, la fabrication des bagues intérieures est simplifiée par la suppression du redan. On peut obtenir directement les bagues par emboutissage puis traitement thermique et rodage des gorges en supprimant l'étape de rectification. Comme on met en place les billes de roulement d'abord sur la bague extérieure, celles-ci sont mieux protégées et risquent moins de s'échapper de leur cage. L'automatisation du procédé de montage du roulement est ainsi facilité. Dans tous les cas on peut utiliser un joint emmanché sur la bague extérieure du type de celui illustré sur la figure 7, ce joint pouvant être suivant les cas mis en place avant ou après la mise en place de la bague intérieure.

## Revendications

1. Roulement, notamment destiné à équiper une butée d'embrayage, du type comprenant une bague (1) intérieure et une bague extérieure (5), réalisées en tôle, chaque bague comportant un chemin de roulement circulaire ayant la forme d'une portion de tore, ledit chemin présentant en section axiale méridienne un profil en arc de cercle concave, une rangée de billes (3) maintenues par une cage de maintien (8) et disposées entre le chemin de roulement d'une première bague qui forme une butée axiale pour les éléments roulants dans un premier sens, et le chemin de roulement d'une deuxième bague qui forme une butée axiale pour les éléments roulants dans un deuxième sens, et un organe d'étanchéité (9) fixé sur la deuxième bague, et comprenant des moyens pour retenir axialement les éléments roulants et leur cage de maintien par rapport à la deuxième bague dans le premier sens, caractérisé par le fait que la cage de maintien des éléments roulants (3) comprend des moyens formant butée axiale dans le deuxième sens et coopérant avec un rebord (18) solidaire de la première bague, le chemin de roulement de l'une des bagues étant situé axialement d'un côté du plan passant par le centre des billes, tandis que le chemin de roulement de l'autre bague est situé axialement de l'autre côté dudit plan .

2. Roulement selon la revendication 1, caractérisé par le fait que la première bague comprend une portée cylindrique (16) pourvue d'une rainure annulaire (17) avec au moins un bord radial (18) capable de coopérer avec les moyens formant butée de la cage.

3. Roulement selon la revendication 2, caractérisé par le fait que la cage de maintien (8) des éléments roulants comprend une portion de butée faisant saillie radialement dans la rainure de la première bague.

4. Roulement selon la revendication 3, caractérisé par le fait que la portion de butée comprend une rangée d'ergots (22).

5. Roulement selon la revendication 3, caractérisé par le fait que la portion de butée comprend une lèvre (23) circulaire flexible radialement.

6. Roulement selon l'une quelconque des revendications 3 à 5, caractérisé par le fait que la portion de butée comprend une surface frontale (22b) destinée à coopérer avec un bord radial (18) de la rainure, ainsi qu'une surface oblique (22a) destinée à faciliter le montage de la cage de maintien sur la première bague.

7. Roulement selon l'une quelconque des revendications 1 à 6, caractérisé par le fait que la cage de maintien (8) des éléments roulants (3) comportant de alvéoles (19) pour les éléments roulants, les moyens formant butée sont disposés entre les alvéoles.

8. Roulement selon l'une quelconque des revendications 1 à 6, caractérisé par le fait que les moyens formant une butée sont disposés du côté de l'organe d'étanchéité.

9. Roulement selon l'une quelconque des revendications 1 à 6, caractérisé par le fait que les moyens formant une butée sont disposés du côté opposé à l'organe d'étanchéité.

10. Butée équipée du roulement selon l'une quelconque des revendication précédentes, comportant une douille de guidage (12) présentant une surface radiale (14a) entrant en contact de friction avec une partie radiale (4) de la bague non tournante (1) et une surface cylindrique coopérant avec des moyens d'auto-alignement élastique (11) du roulement.

11. Procédé de montage d'un roulement selon l'une quelconque des revendications 1 à 9, dans lequel l'on constitue un sous-ensemble comprenant la bague extérieure, la rangée de billes maintenues par leur cage et l'organe d'étanchéité fixé sur la bague extérieure, et on amène la bague intérieure par un mouvement axial, les billes venant en contact avec le chemin de roulement de ladite bague intérieure et les moyens formant butée axiale de la cage venant coopérer avec le rebord de ladite bague intérieure.

12. Procédé de fabrication d'une bague intérieure de roulement, dans lequel on forme par emboutissage à partir d'un flan de tôle au moins un chemin de roulement destiné à coopérer avec des billes et formant une butée axiale pour lesdites billes dans un seul sens, une portée cylindrique adjacente au chemin de roulement de façon que le plan radial séparant le chemin de roulement et la portion cylindrique passe par le centre des billes, et une rainure annulaire dont le bord opposé au chemin de roulement est sensiblement radial, puis on traite thermiquement la bague et on rode le chemin de roulement.
